# DEMANDE DE BREVET EUROPEEN

(11) **EP 1 110 588 A1**
(43) Date de publication de la demande: **27.06.2001**
(21) Numéro de dépôt: 00403577.0
(22) Date de dépôt: 18.12.2000
(51) Int. Cl.: B01D 3/32, F25J 5/00, F25J 3/04, B01D 1/28, F25J 3/08

(54) **Appareil de séparation par distillation et procédé de nettoyage d'un vaporisateur condenseur de l'appareil**

(30) Priorité: 23.12.1999 FR 9916393
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fuentes, François, 78110 Le Vesinet (FR); Wagner, Marc, 94100 Saint Maur des Fosses (FR)
(74) Mandataire: Mercey, Fiona Susan

(57) **Abrégé**

Un appareil de distillation comprend un vaporiseur-condenseur (30) nettoyable en marche, étant doublé par un autre vaporiseur-condenseur (40).

L'appareil ne comprend ni moyen d'arrêter l'envoi de gaz à condenser au condenseur à nettoyer ni moyen d'arrêter le soutirage de liquide vaporisé du condenseur à nettoyer.

## Description

La présente invention concerne un appareil de séparation par distillation, en particulier cryogénique et un procédé de nettoyage d'un vaporiseur condenseur de l'appareil.

L'obtention de bonnes performances énergétiques sur un appareil de séparation d'air par voie cryogénique nécessite l'utilisation d'un échangeur thermique permettant d'assurer le rebouillage de la colonne basse pression et le reflux de la colonne moyenne pression.

Deux fluides sont utilisés:
- de l'azote gazeux (ou éventuellement de l'air) à moyenne pression qu'il faut liquéfier
- de l'oxygène liquide à basse pression qu'il faut vaporiser

La présence dans l'air d'impuretés telles que CO₂, H₂O, NOₓ ou hydrocarbures nécessite l'installation d'unités de pré traitement permettant d'obtenir un fluide compatible avec les procédés de distillation cryogénique.

Cependant, du fait de problèmes opératoires (mauvais fonctionnement, erreurs de contrôle..) ou de par une qualité anormale de l'air à traiter, de faibles quantités d'impuretés peuvent traverser et se retrouver dans les colonnes de distillation et plus précisément, dans le core du vaporiseur d'oxygène liquide.

De nombreuses méthodes existent pour remédier à ce problème : purge, filtres OL... mais toutes présentent l'inconvénient d'être imparfaites.
La solution normalement employée consiste à arrêter l'appareil et "dégivrer" de manière à vaporiser ces impuretés résiduelles.

L'évolution des technologies aval permettant à l'utilisateur gaz aval de faire fonctionner ses usines de plus en plus longtemps entre arrêts conduit naturellement à imposer aux unités de séparation d'air de fonctionner aussi longtemps sans arrêt. L'habitude de s'arrêter pour nettoyer le vaporiseur tous les 2 à 3 années doit donc disparaître au profit de solutions permettant de fonctionner en continu pendant 5 à 6 années, voire de pouvoir nettoyer le vaporiseur sans interruption de la production.

L'idée consiste à implanter les vaporiseurs à l'extérieur des colonnes et de prévoir une isolation partielle par modules.

Il est connu de DE-A-1501760 et de J03-152383 d'utiliser un appareil de séparation d'air comprenant une colonne moyenne pression, une colonne basse pression et deux vaporiseur-condenseurs à l'extérieur des colonnes ,chacun étant alimenté par de l'azote de la colonne moyenne pression et de l'oxygène liquide de la colonne basse pression.

Selon un objet de l'invention, il est prévu un appareil de distillation comprenant au moins une colonne ayant au moins deux vaporiseur-condenseurs à bain situés à l'extérieur de la colonne, des moyens pour envoyer un gaz enrichi en un composant plus volatil de la colonne à chacun des vaporiseur-condenseurs à travers au moins une première conduite respective, des moyens pour envoyer un liquide enrichi en un composant plus volatil de chacun des vaporiseur-condenseurs à la colonne au moins à travers une deuxième conduite respective, des moyens pour envoyer du liquide enrichi en un composant moins volatil à chacun des vaporiseur-condenseurs à travers au moins une troisième conduite respective, des moyens pour soutirer un gaz enrichi en un composant moins volatil de chacun des vaporiseur-condenseurs à travers au moins une quatrième conduite respective, des moyens pour envoyer un mélange comprenant au moins le composant plus volatil et le composant moins volatil à la colonne et des moyens pour soutirer au moins un fluide de la colonne enrichi en un des composants caractérisé en ce que pour permettre le nettoyage d'un des vaporiseur-condenseurs, l'appareil comprend des moyens pour arrêter l'envoi de liquide enrichi en composant plus volatil à la colonne à partir du vaporiseur-condenseur à nettoyer et des moyens pour arrêter l'envoi de liquide enrichi en composante moins volatil au vaporiseur-condenseur à nettoyer et ne comprend pas de moyen pour arrêter le soutirage de gaz enrichi en composant moins volatil du vaporiseur-condenseur à nettoyer et/ou de moyen pour arrêter l'envoi de gaz enrichi en composante plus volatil à partir de la colonne au vaporiseur-condenseur à nettoyer.

Selon un autre aspect de l'invention, il est prévu un appareil de séparation d'air comprenant une colonne moyenne pression, une colonne basse pression, au moins deux vaporiseur-condenseurs à bain situés à l'extérieur des colonnes, des moyens pour envoyer un gaz enrichi en azote de la colonne moyenne pression à chacun des vaporiseur-condenseurs à travers au moins une première conduite respective, des moyens pour envoyer un liquide enrichi en azote de chacun des vaporiseur-condenseurs à la colonne moyenne pression à travers au moins une deuxième conduite respective, des moyens pour envoyer du liquide enrichi en oxygène de la colonne basse pression à chacun des vaporiseur-condenseurs à travers au moins une troisième conduite respective, des moyens pour envoyer un gaz enrichi en oxygène de chacun des vaporiseur-condenseurs à la colonne basse pression à travers au moins une quatrième conduite respective, des moyens pour envoyer de l'air à la colonne moyenne pression et des moyens pour soutirer au moins un fluide d'une des colonnes comme produit et des moyens pour envoyer un liquide enrichi en oxygène de la colonne moyenne pression à la colonne basse pression caractérisé en ce que pour permettre le nettoyage d'un des vaporiseur-condenseurs, l'appareil comprend des moyens pour arrêter l'envoi de liquide enrichi en azote à la colonne moyenne pression à partir du vaporiseur-condenseur à nettoyer et des moyens pour arrêter l'envoi de liquide enrichi en oxygène de la colonne basse pression au vaporiseur-condenseur à nettoyer et ne comprend pas de moyen pour arrêter l'envoi de gaz enrichi en oxygène à la colonne basse pression du vaporiseur-condenseur à nettoyer et/ou de moyen pour arrêter l'envoi de gaz enrichi en azote à partir de la colonne moyenne pression au vaporiseur-condenseur à nettoyer.

Selon un autre aspect de l'invention, il est prévu un appareil de séparation d'air comprenant une colonne, au moins deux vaporiseur-condenseurs à bain situés à l'extérieur de la colonne, des moyens pour envoyer un gaz enrichi en azote de la colonne pression à chacun des vaporiseur-condenseurs à travers au moins une première conduite respective, des moyens pour envoyer un liquide enrichi en azote de chacun des vaporiseur-condenseurs à la colonne à travers au moins une deuxième conduite respective, des moyens pour envoyer du liquide enrichi en oxygène de la colonne à chacun des vaporiseur-condenseurs à travers au moins une troisième conduite respective, des moyens pour envoyer un gaz enrichi en oxygène de chacun des vaporiseur-condenseurs à au moins une quatrième conduite respective, des moyens pour envoyer de l'air à la colonne et des moyens pour soutirer au moins un fluide de la colonne comme produit, caractérisé en ce que pour permettre le nettoyage d'un des vaporiseur-condenseurs, l'appareil comprend des moyens pour arrêter l'envoi de liquide enrichi en azote à la colonne à partir du vaporiseur-condenseur à nettoyer et des moyens pour arrêter l'envoi de liquide enrichi en oxygène de la colonne au vaporiseur-condenseur à nettoyer et ne comprend pas de moyen pour arrêter l'envoi de gaz enrichi en oxygène à la quatrième conduite du vaporiseur-condenseur à nettoyer et/ou de moyen pour arrêter l'envoi de gaz enrichi en azote à partir de la colonne moyenne pression au vaporiseur-condenseur à nettoyer.

Selon un autre aspect de l'invention, il est prévu un appareil de séparation d'air comprenant une colonne moyenne pression, une colonne basse pression, au moins deux vaporiseur-condenseurs à bain situés à l'extérieur des colonnes, des moyens pour envoyer un gaz enrichi en azote de la colonne moyenne pression à un vaporiseur-condenseur de la colonne basse pression, des moyens pour envoyer de l'air à chacun des vaporiseur-condenseurs à travers au moins une première conduite respective, des moyens pour envoyer de l'air au moins partiellement condensé de chacun des vaporiseur-condenseurs à la colonne moyenne pression à travers au moins une deuxième conduite respective, des moyens pour envoyer du liquide enrichi en oxygène de la colonne basse pression à chacun des vaporiseur-condenseurs à travers au moins une troisième conduite respective, des moyens pour envoyer un gaz enrichi en oxygène de chacun des vaporiseur-condenseurs à la colonne basse pression à travers au moins une quatrième conduite respective, des moyens pour envoyer de l'air à la colonne moyenne pression et des moyens pour soutirer au moins un fluide d'une des colonnes comme produit, des moyens pour envoyer un liquide enrichi en oxygène de la colonne moyenne pression à la colonne basse pression.
caractérisé en ce que pour permettre le nettoyage d'un des vaporiseur-condenseurs, l'appareil comprend des moyens pour arrêter l'envoi de l'air au moins partiellement condensé à la colonne moyenne pression à partir du vaporiseur-condenseur à nettoyer et des moyens pour arrêter l'envoi de liquide enrichi en oxygène de la colonne basse pression au vaporiseur-condenseur à nettoyer et ne comprend pas de moyen pour arrêter l'envoi de gaz enrichi en oxygène à la colonne basse pression à partir du vaporiseur-condenseur à nettoyer et/ou de moyen pour arrêter l'envoi de l'air au vaporiseur-condenseur à nettoyer .

Selon d'autres aspects facultatifs, l'appareil comprend:
- des moyens pour envoyer un gaz de purge enrichi azote à la deuxième conduite du vaporiseur-condenseur à nettoyer et un gaz de purge enrichi en oxygène à la troisième conduite du vaporiseur-condenseur à nettoyer.
- des moyens de mise à l'air reliés à la première et la quatrième conduite du vaporiseur-condenseur à nettoyer.

Les moyens de mise à l'air et les moyens d'envoi de gaz de purge peuvent comprendre des orifices calibrés, des vannes automatiques de contrôle ou tout autre moyen permettant de maîtriser les débits.

De préférence, les débits de mise à l'air des première et quatrième conduites sont respectivement supérieurs aux débits de purge des deuxième et troisième conduites.

L'appareil comprend une conduite de purge reliée à la cuve du bain ou à un point bas de la troisième conduite de chaque vaporiseur-condenseur.

L'appareil peut comprendre une conduite de purge reliée à la deuxième conduite du bain de chaque vaporiseur-condenseur.

Selon un autre aspect de l'invention, il est prévu un procédé de nettoyage d'un vaporiseur-condenseur d'un appareil selon une des revendications précédentes comprenant les étapes de:
i) fermer les vannes des deuxième et troisième conduites
ii) purger le liquide enrichi en oxygène du vaporiseur-condenseur à nettoyer à travers une ligne de purge
iii) ouvrir les mises à l'air des première et /ou quatrième conduites et/ou
iv) envoyer du gaz de balayage enrichi en azote à la deuxième conduite et/ou
v) envoyer du gaz de balayage enrichi en oxygène à la troisième conduite.

De préférence le gaz de balayage enrichi en oxygène a une teneur en oxygène préférablement égale ou supérieure à celle du liquide de bain du vaporiseur-condenseur en état de marche et le gaz de purge enrichi en azote a une teneur en azote préférablement égale ou supérieure à celle du gaz enrichi en azote envoyé au vaporiseur-condenseur en état de marche, ceci de manière à ne pas polluer de manière sensible les productions de l'appareil. Eventuellement le gaz de balayage enrichi en oxygène a une teneur en oxygène au moins égale à celle du liquide de bain du vaporiseur-condenseur en état de marche.

Optionnellement le gaz de balayage enrichi en azote a une teneur en azote au moins égale à celle du gaz enrichi en azote envoyé au vaporiseur-condenseur en état de marche.

De préférence le gaz de balayage enrichi en oxygène ou azote est soumis à une détente critique avant injection dans le vaporiseur-condenseur à nettoyer. Les gaz de balayage peuvent être à des températures supérieurs à la température de sublimation ou vaporisation des impuretés présentes dans le vaporiseur-condenseur.
Eventuellement après l'étape i) on purge le liquide enrichi en composante plus volatil contenu dans le vaporiseur-condenseur à nettoyer.

De préférence, le gaz de balayage enrichi en oxygène a une teneur en oxygène au moins égale à celle du liquide de bain du vaporiseur-condenseur en état de marche.

Selon d'aspects facultatifs de l'invention:
- le gaz de balayage enrichi en azote a une teneur en azote au moins égale à celle du gaz enrichi en azote envoyé au vaporiseur-condenseur en état de marche.
- le gaz de balayage enrichi en oxygène ou azote est soumis à une détente critique avant injection dans le vaporiseur-condenseur à nettoyer.
- les gaz de balayage sont à des températures supérieurs à la température de sublimation ou vaporisation des impuretés présentes dans le vaporiseur-condenseur.
- après l'étape i) on purge le liquide enrichi en composante plus volatil contenu dans le vaporiseur-condenseur à nettoyer.
- les débits de mise à l'air des première et quatrième conduites sont respectivement supérieurs aux débits de purge des deuxième et troisième conduites.

Pendant le nettoyage les première et quatrième conduites ne sont pas fermées.

Durant la régénération périodique par dégivrage d'un module isolé, la production reste possible avec un rendement énergétique dégradé.

Cette méthode est applicable sans arrêter la production et sans installer de coûteuses vannes cryogéniques de diamètre important (circuits gazeux azote et oxygène).

Méthode résumée:
- isoler les lignes liquides envoyant le liquide enrichi en oxygène au vaporiseur et sortant le liquide condensé du vaporiseur (air ou azote),
- purger au moins le liquide enrichi en oxygène,
- ouvrir les mise à l'air (les quantités de gaz perdu sont faibles)
- balayer à l'azote
- balayer à l'oxygène.

Un dimensionnement adapté des orifices calibrés (FO) permet d'éliminer tout risque de dépressurisation ou pressurisation excessive des colonnes.

L'invention sera maintenant décrite en plus de détail en se référant aux figures qui sont des dessins schématiques d'appareils selon l'invention.

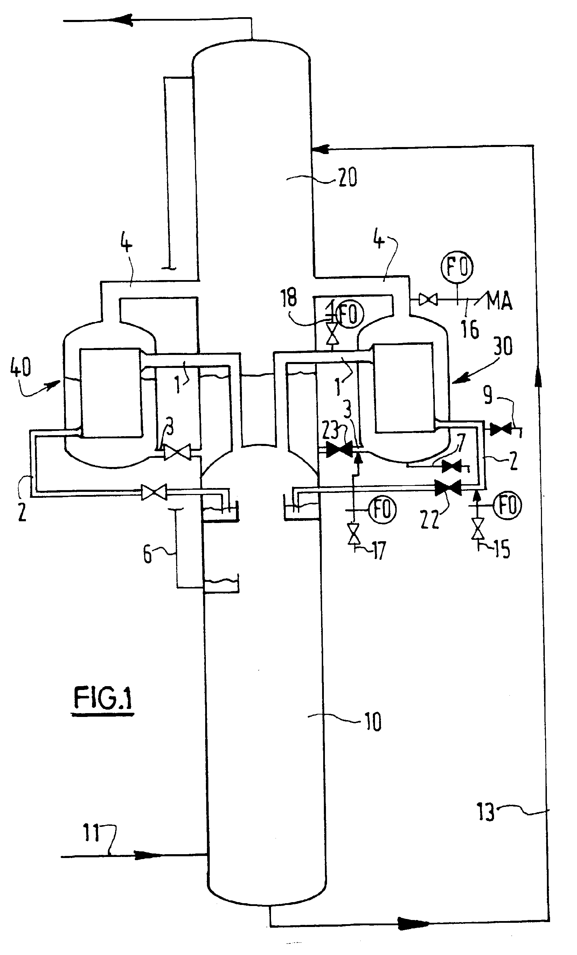

L'appareil de la figure 1 est une double colonne comprenant une colonne moyenne pression 10 et une colonne basse pression 20. Un débit d'air 11 est envoyé à la colonne moyenne pression où il se sépare en un gaz enrichi en azote en tête de colonne et un liquide enrichi en oxygène en cuve de colonne. Le liquide 13 enrichi en oxygène est envoyé en un point intermédiaire à la colonne basse pression.

L'appareil comprend deux vaporiseur-condenseurs 30, 40 dont seul un est en marche à la fois.

Ainsi en opération normal, le vaporiseur-condenseurs40 reçoit du gaz enrichi en azote par la première conduite 1 et du liquide riche en oxygène par la troisième conduite 3.L'oxygène se vaporise pour former de l'oxygène gazeux qui sort à travers la quatrième conduite 4 et le liquide enrichi en azote ainsi formé sort du vaporiseur-condenseur 30 par la deuxième conduite 2 pour être renvoyé à la colonne moyenne pression et éventuellement à la colonne basse pression.

Dans ce cas les vannes d'entrée 23 d'oxygène liquide du vaporiseur-condenseur 30 restent fermées donc toute la vaporisation s'effectue dans le vaporiseur 40.

Quand il est nécessaire de nettoyer celui-ci, on ouvre les vannes d'entrée 23 d'oxygène liquide dans la troisième conduite 3 du vaporiseur 40 qui assume le rôle de vaporiseur pour la double colonne. De cette manière ce sont les conduites 2 et 3 du vaporiseur 40 qui fournissent l'azote liquide et l'oxygène vaporisé à l'appareil.

Afin de nettoyer le vaporiseur 30, on continue de laisser l'azote gazeux rentrer par la conduite 1 de celui-ci. Or l'entrée d'oxygène liquide à travers la conduite 3 est fermée par la vanne 23 et l'oxygène liquide restant dans le vaporiseur est purgé à travers la ligne de purge 7 de la cuve du bain ou reliée à la conduite elle-même (non-illustrée).Optionnellement, pour minimiser les risques de choc thermiques, l'azote liquide restant dans le vaporiseur est purgée à travers une ligne de purge 9 de la conduite 2, la vanne 22 de la conduite 2 étant fermée.

Ensuite on fait ouvrir des mises à l'air (MA) 16,18 dans les conduites 1 et 4 pour que les débits gazeux sortent du vaporiseur-condenseur 30 à travers des orifices calibrés FO.

La prochaine étape consiste à envoyer un gaz de balayage riche en oxygène à la troisième conduite 3 en aval de la vanne 23 pour balayer les impuretés des passages oxygène du vaporiseur 30.Ce gaz est généralement à température ambiante et est au moins aussi pur que l'oxygène vaporisé par le vaporiseur en usage normal.

Un gaz de balayage riche en azote est envoyé à la deuxième conduite en amont de la vanne 22. Ce gaz sert à balayer les impuretés des passages azote.

En tout cas les gaz de balayage doivent être à des températures supérieures à la température de sublimation/vaporisation des impuretés présentes dans le bain (CO₂, H₂O, NOₓ, CₙHₘ...).

Ayant servi à enlever les impuretés restants, les gaz de balayage sont envoyés aux mise à l'air respectives 6 ,8. Ceci entraînera nécessairement des pertes de gaz qui se révèlent pourtant acceptables.

Par exemple, pour un appareil de séparation d'air de 2000 tonnes/jour, la perte maximale instantanée d'azote de la colonne moyenne pression est 1% de l'azote entrant et la perte maximale instantanée d'oxygène de la colonne basse pression est 5% de la production d'oxygène.

Les gaz de balayage peuvent provenir de stockages extérieurs.

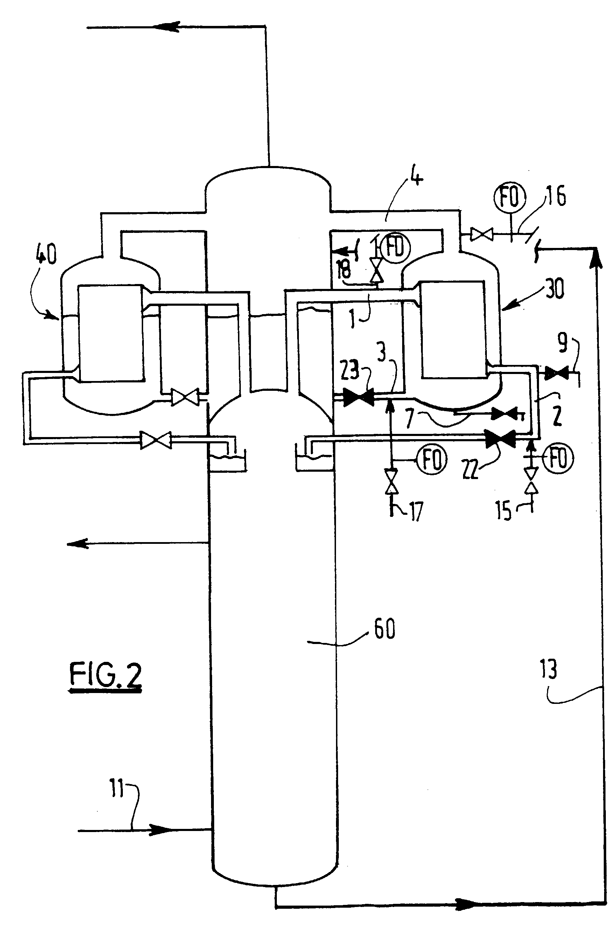

Pour l'appareil de la figure 2, une simple colonne 60 a deux vaporiseur-condenseurs de tête 30,40.

Dans ce cas c'est le liquide riche de la cuve de colonne qui sert à vaporiser l'azote de tête dans les vaporiseurs 30,40.

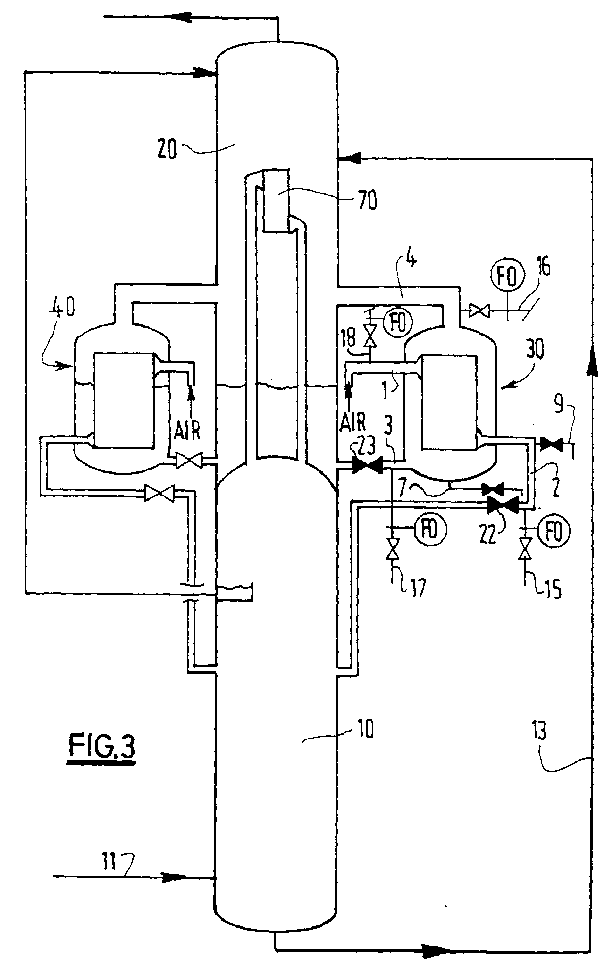

Pour le cas de la figure 3, une double colonne comprend deux vaporiseur-condenseur 30,40 pour vaporiser l'oxygène de cuve de la colonne basse pression par échange de chaleur avec un débit d'air.

L'air partiellement condensé dans le vaporiseur 30 alimente la colonne moyenne pression.

L'azote de tête de la colonne moyenne pression se vaporise dans un troisième vaporiseur 70 à l'intérieur de la colonne .

Evidemment chacune des première, deuxième, troisième et quatrième conduites peuvent comprendre une pluralité de conduites.

La colonne ayant deux vaporiseurs à bain en tête peut être une colonne de production d'argon, une colonne basse pression, une colonne moyenne pression, une colonne à pression intermédiaire d'une triple colonne ou une colonne de mélange d'un appareil de séparation d'air.

La colonne peut séparer un mélange de gaz de l'air ou un mélange comprenant au moins 1% d'hydrogène et/ou au moins 1% de monoxyde de carbone et/ou au moins 1% d'azote et/ou 1% de méthane.

## Revendications

1. Appareil de distillation comprenant au moins une colonne (10,60) ayant au moins deux vaporiseur-condenseurs à bain (30,40) situés à l'extérieur de la colonne, des moyens (1) pour envoyer un gaz enrichi en un composant plus volatil de la colonne à chacun des vaporiseur-condenseurs à travers au moins une première conduite respective, des moyens (2) pour envoyer un liquide enrichi en un composant plus volatil de chacun des vaporiseur-condenseurs à la colonne à travers au moins une deuxième conduite respective, des moyens (3) pour envoyer du liquide enrichi en un composant moins volatil à chacun des vaporiseur-condenseurs à travers au moins une troisième conduite respective, des moyens (4) pour soutirer un gaz enrichi en un composant moins volatil de chacun des vaporiseur-condenseurs à travers au moins une quatrième conduite respective, des moyens (11) pour envoyer un mélange comprenant au moins le composant plus volatil et le composant moins volatil à la colonne et des moyens pour soutirer au moins un fluide de la colonne enrichi en un des composants caractérisé en ce que pour permettre le nettoyage d'un des vaporiseur-condenseurs (30), l'appareil comprend des moyens (22) pour arrêter l'envoi de liquide enrichi en composant plus volatil à la colonne à partir du vaporiseur-condenseur à nettoyer et des moyens (23) pour arrêter l'envoi de liquide enrichi en composante moins volatil au vaporiseur-condenseur à nettoyer et ne comprend pas de moyen pour arrêter le soutirage de gaz enrichi en composant moins volatil du vaporiseur-condenseur à nettoyer et/ou de moyens pour arrêter l'envoi de gaz enrichi en composante plus volatil à partir de la colonne au vaporiseur-condenseur à nettoyer

2. Appareil de séparation d'air selon la revendication 1 comprenant une colonne moyenne pression (10), une colonne basse pression (20), au moins deux vaporiseur-condenseurs à bain (30,40) situés à l'extérieur des colonnes, des moyens (1) pour envoyer un gaz enrichi en azote de la colonne moyenne pression à chacun des vaporiseur-condenseurs à travers au moins une première conduite respective, des moyens (2) pour envoyer un liquide enrichi en azote de chacun des vaporiseur-condenseurs à la colonne moyenne pression à travers au moins une deuxième conduite respective, des moyens (3) pour envoyer du liquide enrichi en oxygène de la colonne basse pression à chacun des vaporiseur-condenseurs à travers au moins une troisième conduite respective, des moyens (4) pour envoyer un gaz enrichi en oxygène de chacun des vaporiseur-condenseurs à la colonne basse pression à travers au moins une quatrième conduite respective, des moyens (11) pour envoyer de l'air à la colonne moyenne pression et des moyens pour soutirer au moins un fluide d'une des colonnes comme produit, des moyens (13) pour envoyer un liquide enrichi en oxygène de la colonne moyenne pression à la colonne basse pression
caractérisé en ce que pour permettre le nettoyage d'un des vaporiseur-condenseurs, l'appareil comprend des moyens (22) pour arrêter l'envoi de liquide enrichi en azote à la colonne moyenne pression à partir du vaporiseur-condenseur à nettoyer et des moyens (23) pour arrêter l'envoi de liquide enrichi en oxygène de la colonne basse pression au vaporiseur-condenseur à nettoyer et ne comprend pas de moyen pour arrêter l'envoi de gaz enrichi en oxygène à la colonne basse pression du vaporiseur-condenseur à nettoyer et/ou de moyen pour arrêter l'envoi de gaz enrichi en azote à partir de la colonne moyenne pression au vaporiseur-condenseur à nettoyer .

3. Appareil de séparation d'air selon la revendication 1 comprenant une colonne (60), au moins deux vaporiseur-condenseurs à bain (30,40) situés à l'extérieur de la colonne, des moyens(1) pour envoyer un gaz enrichi en azote de la colonne à chacun des vaporiseur-condenseurs à travers au moins une première conduite respective, des moyens (2) pour envoyer un liquide enrichi en azote de chacun des vaporiseur-condenseurs à la colonne à travers au moins une deuxième conduite respective, des moyens (3) pour envoyer du liquide enrichi en oxygène de la colonne à chacun des vaporiseur-condenseurs à travers au moins une troisième conduite respective, des moyens (4) pour envoyer un gaz enrichi en oxygène de chacun des vaporiseur-condenseurs à au moins une quatrième conduite respective, des moyens (11) pour envoyer de l'air à la colonne et des moyens pour soutirer au moins un fluide de la colonne comme produit,
caractérisé en ce que pour permettre le nettoyage d'un des vaporiseur-condenseurs, l'appareil comprend des moyens (22) pour arrêter l'envoi de liquide enrichi en azote à la colonne à partir du vaporiseur-condenseur à nettoyer et des moyens (23) pour arrêter l'envoi de liquide enrichi en oxygène de la colonne au vaporiseur-condenseur à nettoyer et ne comprend pas de moyen pour arrêter l'envoi de gaz enrichi en oxygène à la quatrième conduite du vaporiseur-condenseur à nettoyer et/ou de moyen pour arrêter l'envoi de gaz enrichi en azote à partir de la colonne moyenne pression au vaporiseur-condenseur à nettoyer.

4. Appareil de séparation d'air selon la revendication 1 comprenant une colonne moyenne pression (10), une colonne basse pression (20), au moins deux vaporiseur-condenseurs à bain (30,40) situés à l'extérieur des colonnes, des moyens pour envoyer un gaz enrichi en azote de la colonne moyenne pression à un vaporiseur-condenseur (70) de la colonne basse pression, des moyens (1) pour envoyer de l'air à chacun des vaporiseur-condenseurs à travers au moins une première conduite respective, des moyens (2) pour envoyer de l'air au moins partiellement condensé de chacun des vaporiseur-condenseurs à la colonne moyenne pression à travers au moins une deuxième conduite respective, des moyens (3) pour envoyer du liquide enrichi en oxygène de la colonne basse pression à chacun des vaporiseur-condenseurs à travers au moins une troisième conduite respective, des moyens (4) pour envoyer un gaz enrichi en oxygène de chacun des vaporiseur-condenseurs à la colonne basse pression à travers au moins une quatrième conduite respective, des moyens pour envoyer de l'air (11) à la colonne moyenne pression et des moyens pour soutirer au moins un fluide d'une des colonnes comme produit et des moyens (13) pour envoyer un liquide enrichi en oxygène de la colonne moyenne pression à la colonne basse pression
caractérisé en ce que pour permettre le nettoyage d'un des vaporiseur-condenseurs, l'appareil comprend des moyens (22) pour arrêter l'envoi de l'air au moins partiellement condensé à la colonne moyenne pression à partir du vaporiseur-condenseur à nettoyer et des moyens (23) pour arrêter l'envoi de liquide enrichi en oxygène de la colonne basse pression au vaporiseur-condenseur à nettoyer et ne comprend pas de moyen pour arrêter l'envoi de gaz enrichi en oxygène à la colonne basse pression à partir du vaporiseur-condenseur à nettoyer et/ou de moyen pour arrêter l'envoi de l'air au vaporiseur-condenseur à nettoyer.

5. Appareil selon l'une des a revendications 2,3 ou 4 comprenant des moyens (15,17) pour envoyer un gaz de purge enrichi en azote, éventuellement de l'air, à la deuxième conduite du vaporiseur-condenseur à nettoyer et/ou un gaz de purge enrichi en oxygène à la troisième conduite du vaporiseur-condenseur à nettoyer.

6. Appareil selon l'une des revendications 2,3 ou 4 comprenant des moyens (16,18) de mise à l'air reliés à la première et la quatrième conduite du vaporiseur-condenseur à nettoyer.

7. Appareil selon la revendication 5 ou 6 dans lequel les moyens de mise à l'air et/ou les moyens d'envoi de gaz de purge comprennent des orifices calibrés.

8. Appareil selon la revendication 6 ou 7 dans lequel les moyens de mise à l'air et/ou les moyens d'envoi de gaz de purge comprennent des vannes automatiques de contrôle.

9. Appareil selon l'une des revendications précédentes comprenant une conduite de purge (7) de liquide enrichi en oxygène reliée à la cuve du bain de chaque vaporiseur-condenseur ou à la troisième conduite.

10. Appareil selon l'une des revendications précedentes comprenant une conduite de purge (9) de liquide enrichi en azote reliée à la deuxième conduite (2).

11. Procédé de nettoyage d'un vaporiseur-condenseur d'un appareil selon une des revendications précédentes comprenant les étapes de
i) isoler les deuxième et troisième conduites du vaporiseur-condenseur à nettoyer en fermant l'accès à la (aux) colonnes
ii) purger le liquide enrichi en composante moins volatil du vaporiseur-condenseur à nettoyer à travers une conduite de purge
iii) ouvrir les mises à l'air des première et/ou quatrième conduites et/ou
iv) envoyer du gaz de balayage enrichi en azote à la deuxième conduite et/ou
v) envoyer du gaz de balayage enrichi en oxygène à la troisième conduite.

12. Procédé selon la revendication 11 dans lequel le gaz de balayage enrichi en oxygène a une teneur en oxygène au moins égale à celle du liquide de bain du vaporiseur-condenseur en état de marche.

13. Procédé selon la revendication 11 ou 12 dans lequel le gaz de balayage enrichi en azote a une teneur en azote au moins égale à celle du gaz enrichi en azote envoyé au vaporiseur-condenseur en état de marche.

14. Procédé selon les revendications 11,12 ou 13 dans lequel le gaz de balayage enrichi en oxygène ou azote est soumis à une détente critique avant injection dans le vaporiseur-condenseur à nettoyer.

15. Procédé selon les revendications 11 à 14 dans lequel les gaz de balayage sont à des températures supérieurs à la température de sublimation ou vaporisation des impuretés présentes dans le vaporiseur-condenseur.

16. Procédé selon les revendications 11 à 15 dans lequel après l'étape i) on purge le liquide enrichi en composante plus volatil contenu dans le vaporiseur-condenseur à nettoyer.

17. Procédé selon les revendications 11 à 16 dans lequel les débits de mise à l'air des première et quatrième conduites sont respectivement supérieurs aux débits de purge des deuxième et troisième conduites.
